# EUROPEAN PATENT SPECIFICATION

(11) **EP 4 420 230 B1**
(45) Date of publication and mention of the grant of the patent: **30.07.2025**
(21) Application number: 21798018.4
(22) Date of filing: 20.10.2021
(51) Int. Cl.: H02P 3/26, B66B 5/02

(54) **ELEVATOR AND METHOD FOR PERFORMING A MANUAL EMERGENCY DRIVE DURING POWER OUTAGE IN AN ELEVATOR**
AUFZUG UND VERFAHREN ZUR DURCHFÜHRUNG EINES MANUELLEN NOTANTRIEBS BEI STROMAUSFALL BEI EINEM AUFZUG
ASCENSEUR ET PROCÉDÉ DE RÉALISATION D'UN ENTRAÎNEMENT D'URGENCE MANUEL LORS D'UNE COUPURE DE COURANT DANS UN ASCENSEUR

(43) Date of publication of application: 28.08.2024
(73) Proprietor: KONE Corporation, 00330 Helsinki (FI)
(72) Inventor: STOLT, Lauri, 00330 Helsinki (FI); NIKANDER, Juhamatti, 00330 Helsinki (FI)
(74) Representative: Glück Kritzenberger Patentanwälte PartGmbB
(86) International application number: PCT/EP2021/079079
(87) International publication number: WO 2023/066476

(56) References cited:
- EP-A1- 2 062 348
- EP-A1- 3 072 842
- US-A1- 2007 272 492

## Description

### Technological background

Currently, motor drives of elevators have been equipped with a dynamic braking feature which allows braking the movement of the elevator car after the hoisting machine brakes have been opened manually, particularly in case of power outage. As it is well-known in the art, manual opening of the brakes is carried out by a service technician in special operating situations such as in connection with maintenance inspection or commissioning, or for releasing passengers which are trapped in an elevator car due to a power outage situation. By pulling a manual brake lever, the brakes can be opened manually, see for example EP 3 072 842 A1.

In traditional dynamic braking, the stator windings of a permanent magnet motor of an elevator hoisting machinery are shorted by means of a mechanical contactor. When the brakes have been opened via the manual brake lever the traction sheave of the hoisting machines starts to rotate due to the gravity, whereby the rotation of the motor causes EMF (electro motive force) voltage in the windings of the permanent magnet motor. The short-circuit again causes a current flow in the windings creating a motor torque that acts against the rotation of the motor and thus brakes the movement of the elevator car. The problem with this dynamic braking is that it doesn't necessarily work properly with all various motor models and with all various load combinations. With some motor/load combinations, the braking torque may not be adequate and the system would become unstable. A solution for this problem is the use of an oversized motor which again increases costs and thus counteracts the general economical aim to keep the costs of the elevator as low as possible.

It is thus object of the invention to provide an elevator with a dynamic braking option in case of a manual emergency run wherein the generated motor torque corresponds to the individual motor/load situation.

### Summary of the invention

The object of the invention is solved via an elevator according to claim 1 and by a method according to claim 11. Preferred embodiments of the invention are subject-matter of the corresponding dependent claims. Advantageous embodiments of the invention are also described in the specification and in the drawings.

The inventive elevator comprises a manual active dynamic braking function, e.g. for maintenance purposes, in case of safety related interruptions of elevator operation or after power outage. The elevator comprises
- an elevator control for operating at least one elevator car in at least one elevator driveway between landing floors in response to elevator calls,
- an AC elevator motor, which is able to generate power in a generator mode,
- a motor drive connected to the elevator control, particularly for the regulation of the speed of the elevator motor. The motor drive comprises a frequency converter, which again comprises a rectifier bridge and an inverter bridge with semiconductor switch circuits. The rectifier bridge and inverter bridge are connected via a DC link. The motor drive further comprises a drive controller at least to control the semiconductor switches of the inverter bridge to regulate the elevator motor to a reference speed. The semiconductor switch circuits of the inverter bridge are each provided with a semiconductor switch and an antiparallel diode. Further, the motor drive comprises a safety logic for cutting off control pulses to the semiconductor switches, at least during power outage. The safety logic could be a hardware module of the motor drive or it could be a software module which is realized in the motor drive, e.g. in the drive controller.

The elevator brake, typically at least two elevator brakes, is/are located in connection with the elevator motor and/or with a traction sheave of the elevator motor. Furthermore, the elevator has a manual brake release lever which is functionally linked to the elevator brake and movable between a rest position and at least one operating position to release the brake manually. Via the physical connection between the manual brake release lever and the elevator brake it is possible to release the brake manually without electric supply of the brake coils.

According to invention, the motor drive comprises a manual bypass switch which is arranged to operate the safety logic, as to enable dynamical braking of the elevator motor by again connecting the semiconductors of the inverter bridge with the drive controller, which connections are cut-off by means of a safety signal from an elevator safety controller to the safety input of the safety logic. In practice, safety signal is a 24V / 0V DC signal. To enable dynamical braking, the 24VDC signal must be present in the safety input. The manual bypass switch bypasses the cut-off operation of safety controller by supplying 24V DC signal directly to the safety input of the safety logic, by closing the manual bypass switch.

The motor drive further comprises a DC supply circuit connected with the DC link, which DC supply circuit is arranged to supply power at least to the drive controller and to the bypass switch to enable dynamic braking control of the semiconductor switches. The DC supply circuit obtains its power from the DC link which again obtains the power during power outage from the regenerative energy of elevator motor working in generator mode when the car starts moving after brake release via the manual brake release lever because of the imbalance of the elevator system (elevator car plus its load vs. counterweight). The elevator motor feeds the inverter bridge which fires up the DC link via the antiparallel diodes of the semiconductor switch circuits of inverter bridge. The bypass switch is either operated via the manual brake release lever when it is moved away from its rest position or in an alternative embodiment of the invention via a manual actuator, such as a key switch, which is disposed in the same location with the manual brake release lever so that the manual actuator is arranged to operate the manual bypass switch while the brakes are released via the brake release lever.

The elevator safety controller selectively interrupts the safety signal to be issued to the safety logic (STO), to separate the connection between the drive controller and the semiconductor switches of the inverter bridge. This enhances the general safety of the motor drive and of the elevator in general. This function of the safety logic normally disables the use of an active dynamic braking function which necessarily needs a connection between the drive controller and the semiconductor switches of the inverter bridge. Via the invention, the semiconductor switches of the inverter are now reconnected with the drive controller via the bypass switch which again turns the safety logic in a connecting mode so that the drive controller which gets current via the DC supply circuit is able to generate control pulses for the semiconductor switches of the inverter for active dynamic braking which exactly meet the prevailing load/motor constellation.

As been mentioned above, the power generated by the elevator motor is - via the antiparallel diodes of the semiconductor switch circuits - fed to the positive and negative busbar of the DC link as to supply the DC supply circuit, which again is configured to generate a stable DC voltage adapted for the safety logic and the drive controller. The DC supply circuit could for example comprise an adjustable DC/DC converter which is preferably automatically started when enough power is fed to the DC link from the motor via the inverter bridge. This means that active dynamic braking will operate also in a power outage situation, without need for extra reserve power supply. Thus, via the use of the manual brake release lever and alternatively also via the use of the manual actuator, on one hand the brakes are released and on the other hand the safety logic is connected via the bypass switch to the DC supply circuit as to set the safety logic into a re-connecting operation mode again.

Accordingly, the invention provides with simple and economic measures an active dynamic braking function in connection with a manual emergency run option of the elevator, e.g. during maintenance mode or in power outage situations. The inventive solution is easy to implement or to retrofit in older elevator control cabinets and thus may be used during a modernization of older elevators. The manual brake release lever is connected with the elevator brakes preferably by a mechanical wire or by a Bowden cable as to transfer the manual pulling/pushing force of the manual brake release lever to the elevator brakes.

The bypass switch can either be located directly in connection with the manual brake release lever so that by moving the brake release lever from its rest position into an operating position, the bypass switch is automatically operated. In another alternative solution, a manual actuator can be located near the manual brake release lever so that a maintenance technician can release the brakes with the manual brake release lever and can simultaneously start active dynamic braking via operating the manual actuator, which may e.g. be a push button or key switch or the like. The manual brake release lever might be located in a control cabinet aside of the elevator pathway as it is standard in machine room-less elevator control cabinets which are normally located in a landing aside of the elevator shaft and usually even comprises a window or a display to observe movement of the elevator in its pathway.

According to the invention, the bypass switch could - as mentioned above - either be located in local vicinity with the manual brake release lever, in particular in the same control cabinet with the brake lever, or it could be connected with the manual brake release lever via a physical transmission means, for example via a pull wire or a Bowden cable. Thus, the bypass switch doesn't need to be at the same location as the manual brake release lever so that for example the bypass switch can be located in close vicinity to the safety logic or to the drive controller if the safety logic is integrated in the drive controller.

According to a preferred embodiment of the invention, the manual brake release lever or the manual actuator is further connected with a manual drive safety switch, which is provided in connection with the elevator control. Via this manual drive safety switch the elevator control is able to prohibit a new elevator run dependent on the status of the safety switch. This prevents the restart of normal elevator operation as long as the brake release lever is not in its rest position and/or as long as the bypass switch is still in a position for setting the safety logic in an active conducting state. This measure improves the safety of the motor drive and thus of the elevator essentially.

In a preferred embodiment of the invention, the DC supply circuit is arranged to be activated dependent on the voltage level of the DC link. Via this measure it is ensured that the DC supply circuit only feeds power to the drive controller and to the safety logic via the bypass switch if the voltage level in the DC link based on the generator operation of the electromotor is high enough to provide an adapted output voltage for the above components, preferably between 12 and 48 V, preferably about 24 V.

In a preferred embodiment of the invention, the safety logic comprises isolated logic circuits which are operated via a safety signal of the elevator safety controller for connecting the drive controller to the semiconductor switches of the inverter bridge, which control switches are arranged to be commonly operated via a safety relay of the safety logic, whereby the actuation of the safety relay is dependent on the status of elevator system. This ensures that during an operational anomaly, e.g. a power outage , the elevator safety controller of the safety logic is operated as to separate the connection between the drive controller and the semiconductor switches. By closing the bypass switch, either the safety relay is again energized or bypassed as to again set the safety logic into a conducting state which enables an active dynamic braking function to ensure the maximal torque in all load situations and speed situations of a manual rescue drive.

Preferably, the actuation of the safety relay is further dependent on the status of at least one safety device of the elevator, particularly of a safety chain of the elevator, comprising for example the door contacts of the elevator. Via this measure, in normal elevator operation, it is ensured that the safety logic disconnects the control pulses to the semiconductor switches of the inverter bridge if a safety issue comes up, for example if a shaft door or a cabin door opens.

Preferably, the elevator motor is a permanent magnet motor which produces enough power in generator mode as to reliably fire up the DC supply circuit as to enable the active dynamic braking function during the manual rescue drive.

Typically, the elevator comprises at least one speed sensor for the motor speed and/or car speed connected to the motor drive as to regulate the motor to the reference speed.

Advantageously, the elevator comprises a separating relay to separate the frequency converter from mains while the manual active dynamic braking function is activated, particularly during a power outage. Via this feature, the electric circuit of the elevator is separated from mains as to avoid retrieving extra power from mains. This way it can be ensured, that the manual active dynamic braking operation is based exclusively on regenerative power of the elevator motor.

The invention also relates to a method for performing a manual drive in an elevator according to the above specifications during maintenance, installation and power outage etc.. In the inventive method, following steps are performed: the connection of the motor drive to mains is cut off via the separating relay, the connection of the drive controller to the semiconductor switches of the inverter bridge is cut off by the safety logic, by the actuation of the manual brake release lever the elevator brakes are released, which enables the motor to rotate. By the actuation of the manual brake release lever or by operating a manual actuator in the vicinity thereof, the separating status of the safety logic is changed to an operating status to again connect the drive controller with the semiconductor switches of the inverter bridge to enable dynamic braking of the elevator motor. The invention thus finds that the operation of the manual brake release lever by a service technician may be used to reconnect the drive controller with the semiconductor switches to enable active dynamic braking via the drive controller. Accordingly, also in mains power-off or power outage situations, where normally the triggered safety logic prevents the use of dynamic braking, the invention overcomes this problem by re-enabling the safety logic to work and thus enables the use of active dynamic braking during a manual rescue drive of the elevator car. Thus, preferably, by moving the manual brake release lever from its rest position or by operating a manual actuator in its vicinity, the safety logic is automatically reconnected to the DC supply circuit enabling dynamic braking.

Furthermore, preferably, by the release of the elevator brakes via the manual brake release lever, the elevator motor is initiated to feed electric power in generator mode via the antiparallel diodes of the semiconductor switches of the inverter to the DC link. This again enables the supply of power to the drive controller and to the safety logic - via the bypass switch - by means of the DC supply circuit.

Preferably, the DC supply circuit is woken up dependent on the voltage in the DC link so that it is only active to feed power to the drive controller and to the safety logic if the voltage level in the DC link is sufficient to provide sufficient DC current for these components.

The safety of the elevator can be improved if a new elevator run is prohibited dependent on the status of a manual drive safety switch which is connected with the manual brake release lever and/or with the manual actuator. Via this measure, re-start of the elevator can be prevented as long as the manual brake release lever is still not back in its rest position or as long as the manual actuator is still operated.

Following terms are used as synonyms: mains power-off - power outage; in the same location - near - in the vicinity (meaning that the skilled person can actuate the manual actuator while simultaneously operating the brake release lever); manual emergency elevator run - manual rescue drive;

It is obvious for the skilled person that the above embodiments may be combined with each other arbitrarily as long as technical features are not in contradiction to each other.

### Description of a preferred embodiment of the invention

The invention is now described with the aid of the enclosed schematic drawing wherein
- Fig. 1: shows a schematic circuit diagram of an elevator and a motor drive enabling dynamic braking in connection with a manual emergency elevator run, and
- Fig. 2: a circuit diagram of the inverter bridge with six semiconductor switch circuits to provide energy from the elevator motor to the DC link.

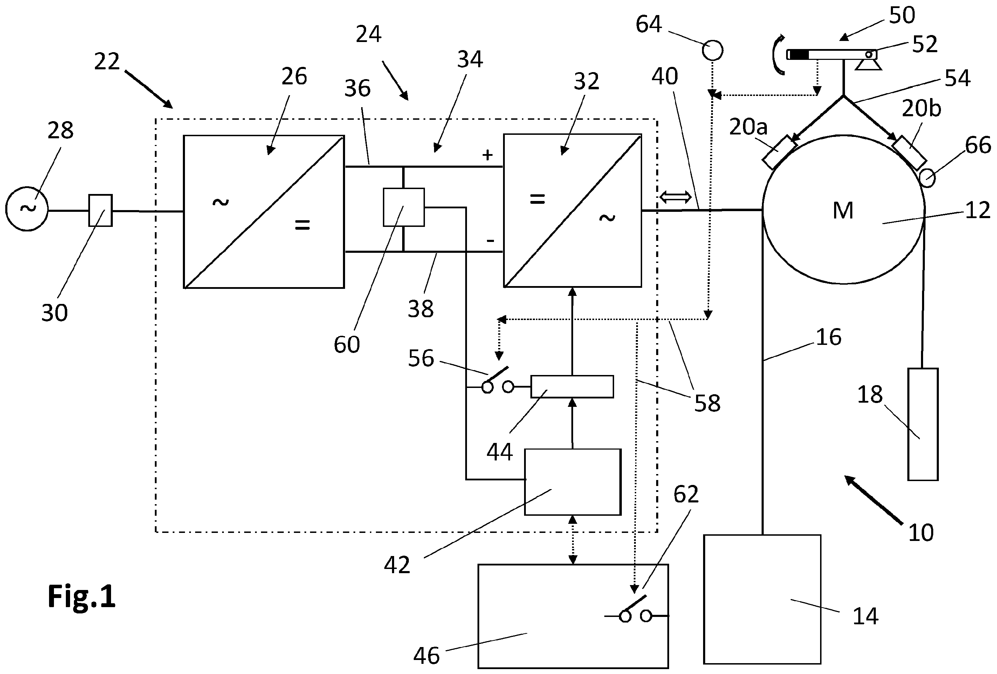

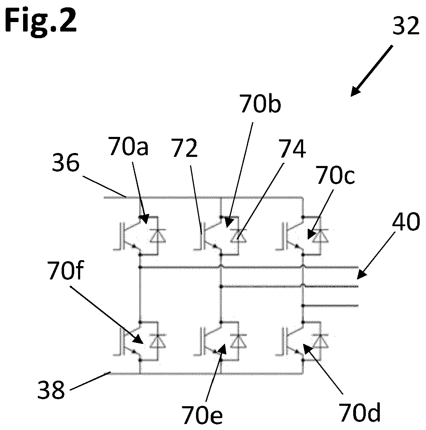

Fig. 1 shows an elevator 10 having an elevator motor 12 for moving an elevator car 14 which is suspended via elevator ropes 16 on a traction sheave of the elevator motor whereby on the other end of the elevator rope 16 a counterweight 18 is arranged in a per se known manner. The elevator motor 12 is provided with two elevator brakes 20a, 20b which are operated during normal elevator operation by a brake controller not shown. The elevator motor 12 is operated via a motor drive 22 which motor drive comprises a frequency converter 24 with a rectifier bridge 26 connected to AC mains 28 via a separating relay 30. The frequency converter 24 further comprises an inverter bridge 32 which is connected to the rectifier bridge 26 via a DC link 34 with a positive busbar 36 and a negative busbar 38 whereby the inverter bridge 32 is connected to the elevator motor 12 via a feed line 40. The motor drive 22 further comprises a drive controller 42 for controlling the control pulses of semiconductor switches of the inverter bridge as shown in more detail in Fig. 2. The control pulses from the drive controller 42 to the inverter bridge 32 pass through a safety logic 44 which is operated as to separate the drive controller 44 from the inverter bridge 32 in case of a power outage. The elevator 10 further comprises an elevator control 46 which acts together with the drive controller 42 and with elevator call components as floor call devices, park call devices, displays and so on which are not shown here as they are not relevant for the invention in this context. The elevator brakes 20a, 20b are connected with a manual brake release lever 50 which is turnable about a pivot axis 52 away from a rest position into an operating position where the two elevator brakes 20a and 20b are released. On that behaviour, the brake release lever is physically connected via a physical transmission means 54 with the elevator brakes. With the manual brake release lever 50, a bypass switch 56 is connected via a physical transmission means 58. Alternatively, the bypass switch could also be arranged in connection with the brake release lever in which case the electric lines would have to be provided between the manual brake release lever and the safety logic 44. The bypass switch 56 connects the safety logic 44 with a DC supply circuit 60 connected with the DC link 34. The DC supply circuit feeds electric power to the safety logic when the bypass switch 56 is closed and to the drive controller 42. The physical transmission means for the bypass switch 56 also branches to a manual drive safety switch 62 arranged in the elevator control, which safety switch is opened when the brake release lever 50 is moved away from its rest position or when a manual actuator 64, for example a push button or a key switch, in the vicinity of the manual brake release lever is operated, as an alternative to the operation of the bypass switch and the manual drive safety switch via the manual brake release lever 50. Via the manual drive safety switch 62, the elevator control prevents normal elevator operation as long as the brake release lever 50 is not in its rest position or as long as the manual actuator 64 is still actuated. This enhances the safety of the system.

Further in connection with the motor 12 or its traction sheave a speed sensor 66 is located for generating a speed signal to the elevator control 46 and to the motor drive 42 for the regulation of the motor speed and for safety purposes.

Fig. 2 shows the configuration of the inverter bridge 32 which comprises six semiconductor switch circuits 70 each consisting of a semiconductor switch 72, e.g. an IGBT or MOSFET, which is connected in parallel with an antiparallel diode 74. The inverter bridge 32 provides six of such semiconductor switch circuits 70a to 70f, three of them connected the positive 36 and three of them connected to the negative busbar 38 of the DC link 34. The semiconductor switch circuits 70a to 70f are connected between the two busbars 36 and 38 of the DC link 34 on one hand and to the feed line 40 of the motor on the other hand which is a three-phase feed line according to a standard three-phase elevator motor 12 which is preferably a permanent magnet motor.

It has to be considered that the safety logic 44 can either be a hardware module located between the drive controller and the inverter bridge 34 or being integrated in the drive controller as a software component. Furthermore, it has to be considered that the bypass switch 56 and the manual drive safetyswitch 62 can be arranged either in connection with their respective electronic components 44 and 62 in which case they have to be connected via a physical transmission means 58. Alternatively, these switches 56 and 62 can be located in local connection with the brake release lever 50 and/or the manual actuator 64. In this case only the electric wires have to be lead to from the bypass switch 56 and the manual drive safety switch 62 to the corresponding electronic components 44 and 46.

The elevator of Fig. 1 enables active dynamic braking during a manual rescue drive or a corresponding situation in maintenance. In this case, the brake release lever 50 is pulled from its rest position which leads to the release of the two elevator brakes 20a and 20b so that the elevator motor 12 starts rotating because of the imbalance of the elevator system and generates electric power. The electric power is input via the motor feed line 40 to the six semiconductor switch circuits 70a to 70f where via the diodes 74 connect the corresponding positive and negative electric half waves of the generated AC to the positive and negative busbar 36 and 38 of the DC link. Accordingly, via the rotation of the elevator motor 12 running in generator mode the DC supply circuit 60 gets enough power via the DC link 34 to feed power to the drive controller 42. With the movement of the brake release lever 50 away from its rest position or alternatively by pushing the manual actuator 64, the bypass switch 56 is closed so that also the safety logic 44 which was disconnecting in any operational anomaly, such as due to opening of elevator safety chain, e.g. due to power outage, is now fed from the DC supply circuit 60 to be set into a connecting state. This allows the control pulses from the drive controller 42 now being fed to the semiconductor switches 72 of the six semiconductor switch circuits 70a to 70f as to provide a controlled short-circuit in the windings of the elevator motor generating controlled torque resisting the rotation of the elevator motor which again enables a brake movement to the velocity of the elevator car during the manual emergency ride.

With the power outage, the separating relay 30 separates the frequency converter 24 from AC mains 28 so that the action of the motor drive 22 during the manual rescue drive are not affected by unstable conditions in the AC mains 28. This way it can also be ensured, that the manual active dynamic braking operation is based exclusively on regenerative power of the elevator motor 12, and no potentially dangerous extra drive torque may be generated based on power supply from AC mains.

It is clear for the skilled person that the invention is not restricted to the embodiment of the figures but may be varied within the scope of the appended patent claims.

**Table of reference numbers:**

| | |
|---|---|
| 10 | elevator |
| 12 | elevator motor - permanent magnet motor with generating mode |
| 14 | elevator car |
| 16 | elevator ropes |
| 18 | counterweight |
| 20a,b | elevator brakes |
| 22 | motor drive |
| 24 | frequency converter |
| 26 | rectifier bridge |
| 28 | AC mains - public AC network |
| 30 | separating relay |
| 32 | inverter bridge |
| 34 | DC link between rectifier bridge and inverter bridge |
| 36 | positive busbar of the DC link |
| 38 | negative busbar of the DC link |
| 40 | bidirectional power line between inverter bridge and elevator motor |
| 42 | drive controller |
| 44 | safety logic |
| 46 | elevator control |
| 50 | manual brake release lever |
| 52 | pivot point/bearing for the brake release lever |
| 54 | physical transmission means between brake release lever and elevator brakes - Bowden cable |
| 56 | bypass switch |
| 58 | physical transmission means between brake release lever and bypass switch/manual drive safety switch |
| 60 | DC supply circuit |
| 62 | manual drive safety switch |
| 64 | manual actuator - push button near the brake release lever |
| 66 | motor speed sensor - tachymeter connected to the elevator control/drive controller |

## Claims

1. Elevator (10) comprising a manual active dynamic braking function, which elevator comprises
- an elevator control (46) for operating at least one elevator car (14) in at least one elevator driveway between landing floors in response to elevator calls,
- an AC elevator motor ( 12), which is able to generate power in a generator mode,
- a motor drive ( 22) connected to the elevator control (46) for the regulation of the speed of the elevator motor (14), the motor drive (22) comprising a frequency converter (24) including a rectifier bridge (26) and an inverter bridge (32) which are connected via a DC link (34 ), the inverter bridge (32) including semiconductor switch circuits (70a - 70f), the motor drive ( 22) further comprising a drive controller (42) for controlling the semiconductor switch circuits (70a - 70f) to regulate the elevator motor (12) to a reference speed,
whereby
- the semiconductor switch circuits (70a - 70f) of the inverter bridge (32) each comprise a diode (74) connected anti-parallel to a semiconductor switch (72),
- the motor drive (22) comprises a safety logic (44) for cutting off control pulses to the semiconductor switches (72), at least during power outage,
- at least one elevator brake (20a, 20b) is located in connection with the elevator motor ( 12) and/or with a traction sheave of the elevator motor (12),
- a manual brake release lever (50) is functionally linked (54) to the elevator brake (20a, 20b), movable between a rest position and at least one operating position to release the elevator brake (20a, 20b) manually,
**characterized in that**
- the motor drive (22) comprises a manual bypass switch (56) for operating the safety logic (44) as to enable dynamical braking of the elevator motor (12) by connecting the semiconductors (72) with the drive controller (42),
- the motor drive (22) comprises a DC supply circuit (60) connected with the DC link (34),
- the DC supply circuit (60) is arranged to supply power at least to the drive controller (42) and to the bypass switch (56) to enable dynamic braking control of the semiconductor switches (72), and that the manual brake release lever (50) is functionally connected with the bypass switch (56) and is arranged to operate the bypass switch (56), when it is moved from its rest position or that the elevator (10) comprises a manual actuator (64), such as a key switch, disposed in the same location with the manual brake release lever (50), which manual actuator (64) is arranged to operate the bypass switch (56).

2. Elevator according to claim 1, **characterized in that** the manual brake release lever (50) is connected to the bypass switch (56) via a physical transmission means (58), preferably a Bowden cable.

3. Elevator according to any of the preceding claims, **characterized in that** the manual brake release lever (50) is connected to the elevator brake (20a, 20b) via a physical transmission means (54), preferably a Bowden cable.

4. Elevator according to any of the preceding claims, **characterized in that** the manual brake release lever (50) or the manual actuator (64) is further connected with a manual drive safety switch (62), which is connected to the elevator control (46), whereby the elevator control (46) is arranged to prohibit a new elevator run dependent on the status of the manual drive safety switch (62).

5. Elevator according to any of the preceding claims, **characterized in that** the DC supply circuit (60) is arranged to be activated dependent on the voltage level of the DC link (34).

6. Elevator according to any of the preceding claims, **characterized in that** the DC supply circuit (60) is an adjustable DC/DC converter generating an output voltage between 12 and 48 V, preferably 24V.

7. Elevator according to any of the preceding claims, **characterized in that** the safety logic (44) comprises control switches for connecting the drive controller (42) to the semiconductor switches (72) of the inverter bridge (32), which control switches are arranged to be commonly operated via a safety relay of the safety logic (44), whereby the actuation of the safety relay is dependent on the status of mains power on/off .

8. Elevator according to claim 7, **characterized in that** the actuation of the safety relay is dependent on the status of at least one safety device of the elevator (10), particularly a safety chain of the elevator (10), comprising door contacts of the elevator (10).

9. Elevator according to one of the preceding claim, **characterized in that** the elevator motor (12) is a permanent magnet motor.

10. Elevator according to one of the preceding claim, **characterized in that** a separating relay (30) is connected between AC mains (28) and the rectifier bridge (26) to separate the frequency converter (24) from AC mains (28),

11. Method for performing a manual emergency drive during power outage in an elevator according to one of the previous claims,
in which method in case of power outage:
- the connection of the motor drive (22) to AC mains (28) is cut off via the separating relay (30),
- the connection of the drive controller (42) to the semiconductor switches (72) of the inverter bridge (32) is cut off by the safety logic (44),
- by the actuation of the manual brake release lever (50) the elevator brakes (20a, 20b) are released, **characterized in that**:
- by the actuation of the manual brake release lever (50) or by operating a manual actuator (64) in the vicinity thereof the separating status of the safety logic (44) is changed to an operating status to connect the drive controller (42) with the semiconductor switches (72) of the inverter bridge (32) to enable dynamic braking of the elevator motor (12).

12. Method according to claim 11, **characterized in that** by moving the manual brake release lever (50) from its rest position the safety logic is connected to the DC supply circuit (60).

13. Method according to claim 11 or 12, **characterized in that** by the release of the elevator brakes (20a, 20b) the elevator motor (12) is initiated to feed electric power in generator mode via the antiparallel diodes (74) of semiconductor switch circuits (70a - 70f) to the DC link (34).

14. Method according to claim 13, **characterized in that** the DC supply circuit (60) is woken up dependent on the voltage in the DC link.

15. Method according to any of claims 11 to 14, **characterized in that** a new elevator run is prohibited dependent on the status of a manual drive safety switch (62) connected with the manual brake release lever (50) and/or with the manual actuator (64).

## Patentansprüche

1. Aufzug (10) mit einer manuellen aktiven dynamischen Bremsfunktion, wobei der Aufzug umfasst:
- eine Aufzugssteuerung (46) zum Betreiben mindestens einer Aufzugskabine (14) in mindestens einer Aufzugsauffahrt zwischen den Stockwerken als Reaktion auf Aufzugsrufe,
- einen AC-Aufzugsmotor (12), der im Generatorbetrieb Strom erzeugen kann,
- einen mit der Aufzugssteuerung (46) verbundenen Motorantrieb ( 22) zur Regelung der Drehzahl des Aufzugsmotors (14), wobei der Motorantrieb (22) einen Frequenzwandler (24) mit einer Gleichrichterbrücke (26) und einer Wechselrichterbrücke (32) umfasst, die über einen Gleichspannungszwischenkreis (34) verbunden sind, die Wechselrichterbrücke (32) Halbleiterschaltkreise (70a - 70f) enthält, wobei der Motorantrieb (22) ferner einen Antriebsregler (42) zur Steuerung der Halbleiterschaltkreise (70a - 70f) zur Regelung des Aufzugmotors (12) auf eine Solldrehzahl enthält,
wobei
- die Halbleiterschaltkreise (70a - 70f) der Wechselrichterbrücke (32) jeweils eine Diode (74) umfassen, die antiparallel zu einem Halbleiterschalter (72) geschaltet ist,
- der Motorantrieb (22) eine Sicherheitslogik (44) zur Unterbrechung der Steuerimpulse zu den Halbleiterschaltern (72) zumindest während eines Stromausfalls umfasst,
- mindestens eine Aufzugsbremse (20a, 20b) in Verbindung mit dem Aufzugsmotor (12) und/oder mit einer Treibscheibe des Aufzugsmotors (12) angeordnet ist,
- ein manueller Bremslösehebel (50) funktionell mit der Aufzugsbremse (20a, 20b) verbunden (54) ist, der zwischen einer Ruheposition und mindestens einer Betriebsposition beweglich ist, um die Aufzugsbremse (20a, 20b) manuell zu lösen,
**dadurch gekennzeichnet, dass**
- der Motorantrieb (22) einen manuellen Bypass-Schalter (56) zur Betätigung der Sicherheitslogik (44) umfasst, um ein dynamisches Abbremsen des Aufzugmotors (12) durch Verbinden der Halbleiter (72) mit der Antriebssteuerung (42) zu ermöglichen,
- der Motorantrieb (22) eine Gleichstromversorgungsschaltung (60) umfasst, die mit dem Gleichstromzwischenkreis (34) verbunden ist,
- der Gleichstromversorgungsschaltkreis (60) so angeordnet ist, dass er zumindest die Antriebssteuerung (42) und den Bypass-Schalter (56) mit Strom versorgt, um eine dynamische Bremssteuerung der Halbleiterschalter (72) zu ermöglichen, und dass der manuelle Bremslösehebel (50) funktional mit dem Bypass-Schalter (56) verbunden ist und so angeordnet ist, dass er den Bypass-Schalter (56) betätigt, wenn er aus seiner Ruhestellung bewegt wird, oder dass der Aufzug (10) ein manuelles Betätigungselement (64), wie z.B. einen Schlüsselschalter, umfasst, das an der gleichen Stelle wie der manuelle Bremslösehebel (50) angeordnet ist, wobei das manuelle Betätigungselement (64) so angeordnet ist, dass es den Bypass-Schalter (56) betätigt.

2. Aufzug nach Anspruch 1, **dadurch gekennzeichnet, dass** der Handbremslüftungshebel (50) mit dem Bypass-Schalter (56) über ein physikalisches Übertragungsmittel (58), vorzugsweise einen Bowdenzug, verbunden ist.

3. Aufzug nach einem der vorhergehenden Ansprüche, **dadurch gekennzeichnet, dass** der Handbremslösehebel (50) über ein physikalisches Übertragungsmittel (54), vorzugsweise einen Bowdenzug, mit der Aufzugsbremse (20a, 20b) verbunden ist.

4. Aufzug nach einem der vorhergehenden Ansprüche, **dadurch gekennzeichnet, dass** der manuelle Bremslösehebel (50) oder der manuelle Aktuator (64) ferner mit einem manuellen Fahrsicherheitsschalter (62) verbunden ist, der mit der Aufzugssteuerung (46) verbunden ist, wobei die Aufzugssteuerung (46) ausgebildet ist, dass sie eine neue Aufzugsfahrt in Abhängigkeit vom Status des manuellen Fahrsicherheitsschalters (62) unterbindet.

5. Aufzug nach einem der vorhergehenden Ansprüche, **dadurch gekennzeichnet, dass** die Gleichstromversorgungsschaltung (60) so ausgebildet ist, dass sie in Abhängigkeit vom Spannungsniveau des Gleichstromzwischenkreises (34) aktiviert wird.

6. Aufzug nach einem der vorhergehenden Ansprüche, **dadurch gekennzeichnet, dass** die Gleichstromversorgungsschaltung (60) ein einstellbarer DC/DC-Wandler ist, der eine Ausgangsspannung zwischen 12 und 48 V, vorzugsweise 24 V, erzeugt.

7. Aufzug nach einem der vorhergehenden Ansprüche, **dadurch gekennzeichnet, dass** die Sicherheitslogik (44) Steuerschalter zum Verbinden des Antriebsreglers (42) mit den Halbleiterschaltern (72) der Wechselrichterbrücke (32) umfasst, wobei die Steuerschalter ausgebildet sind, gemeinsam über ein Sicherheitsrelais der Sicherheitslogik (44) betätigt zu werden, wobei die Betätigung des Sicherheitsrelais vom Status der Netzspannung ein/aus abhängig ist.

8. Aufzug nach Anspruch 7, **dadurch gekennzeichnet, dass** die Ansteuerung des Sicherheitsrelais vom Zustand mindestens einer Sicherheitseinrichtung des Aufzugs (10), insbesondere einer Türkontakte des Aufzugs (10) aufweisenden Sicherheitskette des Aufzugs (10) abhängig ist.

9. Aufzug nach einem der vorhergehenden Ansprüche, **dadurch gekennzeichnet, dass** der Aufzugmotor (12) ein Permanentmagnetmotor ist.

10. Aufzug nach einem der vorhergehenden Ansprüche, **dadurch gekennzeichnet, dass** ein Trennrelais (30) zwischen das Wechselstromnetz (28) und die Gleichrichterbrücke (26) geschaltet ist, um den Frequenzumrichter (24) vom Wechselstromnetz (28) zu trennen.

11. Verfahren zur Durchführung einer manuellen Notfahrt während eines Stromausfalls in einem Aufzug nach einem der vorhergehenden Ansprüche,
in welchem Verfahren bei Stromausfall:
- wird die Verbindung des Motorantriebs (22) zum Wechselstromnetz (28) über das Trennrelais (30) unterbrochen,
- die Verbindung des Antriebsreglers (42) mit den Halbleiterschaltern (72) der Wechselrichterbrücke (32) von der Sicherheitslogik (44) unterbrochen wird,
- durch die Betätigung des Handbremslüftungshebels (50) die Aufzugsbremsen (20a, 20b) gelöst werden,
**dadurch gekennzeichnet, dass**
- durch die Betätigung des Handlüfthebels (50) oder durch die Betätigung eines manuellen Aktuators (64) in dessen Nähe der Trennzustand der Sicherheitslogik (44) in einen Betriebszustand geändert wird, um den Antriebsregler (42) mit den Halbleiterschaltern (72) der Wechselrichterbrücke (32) zu verbinden, um ein dynamisches Bremsen des Aufzugmotors (12) zu ermöglichen.

12. Verfahren nach Anspruch 11, **dadurch gekennzeichnet, dass** durch Bewegen des Handbremslüftungshebels (50) aus seiner Ruhestellung die Sicherheitslogik mit dem Gleichstromversorgungskreis (60) verbunden wird.

13. Verfahren nach Anspruch 11 oder 12, **dadurch gekennzeichnet, dass** durch das Lösen der Aufzugsbremsen (20a, 20b) der Aufzugsmotor (12) veranlasst wird, elektrische Leistung im Generatorbetrieb über die antiparallelen Dioden (74) von Halbleiterschaltkreisen (70a - 70f) in den Zwischenkreis (34) einzuspeisen.

14. Verfahren nach Anspruch 13, **dadurch gekennzeichnet, dass** der Gleichstromversorgungskreis (60) in Abhängigkeit von der Spannung im Gleichstromzwischenkreis aktiviert wird.

15. Verfahren nach einem der Ansprüche 11 bis 14, **dadurch gekennzeichnet, dass** eine neue Aufzugsfahrt in Abhängigkeit vom Zustand eines mit dem Handbremslüftungshebel (50) und/oder mit dem Handantrieb (64) verbundenen Sicherheitsschalters (62) für eine manuelle Fahrt gesperrt wird.

## Revendications

1. Ascenseur (10) comprenant une fonction de freinage dynamique actif manuel, lequel ascenseur comprend :
- une commande d'ascenseur (46) pour faire fonctionner au moins une cabine d'ascenseur (14) dans au moins un trajet de déplacement d'ascenseur entre des étages de palier en réponse à des appels d'ascenseur,
- un moteur d'ascenseur à courant alternatif, AC, (12) qui est apte à générer de l'énergie dans un mode de générateur,
- un entraînement par moteur (22) relié à la commande d'ascenseur (46) pour la régulation de la vitesse du moteur d'ascenseur (14), l'entraînement par moteur (22) comprenant un convertisseur de fréquence (24) comportant un pont redresseur (26) et un pont inverseur (32) qui sont connectés via une liaison à courant continu, DC, (34), le pont inverseur (32) comportant des circuits de commutateurs à semi-conducteurs (70a-70f), l'entraînement par moteur (22) comprenant en outre une commande d'entraînement (42) pour commander les circuits de commutateurs à semi-conducteurs (70a-70f) pour réguler le moteur d'ascenseur (12) à une vitesse de référence,
dans lequel
- les circuits de commutateurs à semi-conducteurs (70a-70f) du pont inverseur (32) comprennent chacun une diode (74) connectée en antiparallèle à un commutateur à semi-conducteurs (72),
- l'entraînement par moteur (22) comprend une logique de sécurité (44) pour couper des impulsions de commande des commutateurs à semi-conducteurs (72), au moins pendant une coupure de courant,
- au moins un frein d'ascenseur (20a, 20b) est positionné en liaison avec le moteur d'ascenseur (12) et/ou avec une poulie de traction du moteur d'ascenseur (12),
- un levier de desserrage de frein manuel (50) est opérationnellement relié (54) au frein d'ascenseur (20a, 20b), mobile entre une position de repos et au moins une position de fonctionnement pour desserrer manuellement le frein d'ascenseur (20a, 20b),
**caractérisé en ce que**
- l'entraînement par moteur (22) comprend un commutateur de dérivation manuel (56) pour activer la logique de sécurité (44) de manière à permettre un freinage dynamique du moteur d'ascenseur (12) en connectant les semi-conducteurs (72) à la commande d'entraînement (42),
- l'entraînement par moteur (22) comprend un circuit d'alimentation en courant continu, DC, (60) connecté à la liaison DC (34),
- le circuit d'alimentation DC (60) est conçu pour fournir de l'énergie au moins à la commande d'entraînement (42) et au commutateur de dérivation (56) afin de permettre une commande de freinage dynamique des commutateurs à semi-conducteurs (72), et **en ce que** le levier de desserrage de frein manuel (50) est opérationnellement relié au commutateur de dérivation (56) et est conçu pour activer le commutateur de dérivation (56), lorsqu'il est déplacé à partir de sa position de repos, ou **en ce que** l'ascenseur (10) comprend un actionneur manuel (64), tel qu'un interrupteur à clé, disposé au même emplacement que le levier de desserrage de frein manuel (50), lequel adaptateur manuel (64) est conçu pour faire fonctionner le commutateur de dérivation (56).

2. Ascenseur selon la revendication 1, **caractérisé en ce que** le levier de desserrage de frein manuel (50) est relié au commutateur de dérivation (56) via des moyens de transmission physiques (58), de préférence un câble Bowden.

3. Ascenseur selon l'une quelconque des revendications précédentes, **caractérisé en ce que** le levier de desserrage de frein manuel (50) est relié au frein d'ascenseur (20a, 20b) via des moyens de transmission physiques (54), de préférence un câble Bowden.

4. Ascenseur selon l'une quelconque des revendications précédentes, **caractérisé en ce que** le levier de desserrage de frein manuel (50) ou l'actionneur manuel (64) est en outre relié à un commutateur de sécurité d'entraînement manuel (62), qui est relié à la commande d'ascenseur (46), la commande d'ascenseur (46) étant conçue pour interdire une nouvelle course d'ascenseur en fonction de l'état du commutateur de sécurité d'entraînement manuel (62).

5. Ascenseur selon l'une quelconque des revendications précédentes, **caractérisé en ce que** le circuit d'alimentation DC (60) est conçu pour être activé en fonction du niveau de tension de la liaison DC (34).

6. Ascenseur selon l'une quelconque des revendications précédentes, **caractérisé en ce que** le circuit d'alimentation DC (60) est un convertisseur continu/continu réglable générant une tension de sortie comprise entre 12 et 48 V, de préférence de 24 V.

7. Ascenseur selon l'une quelconque des revendications précédentes, **caractérisé en ce que** la logique de sécurité (44) comprend des commutateurs de commande pour connecter la commande d'entraînement (42) aux commutateurs à semi-conducteurs (72) du pont inverseur (32), lesquels commutateurs de commande sont conçus pour fonctionner en commun via un relais de sécurité de la logique de sécurité (44), l'actionnement du relais de sécurité étant dépendant de l'état de marche/arrêt de l'alimentation par le secteur.

8. Ascenseur selon la revendication 7, **caractérisé en ce que** l'actionnement du relais de sécurité est dépendant de l'état d'au moins un dispositif de sécurité de l'ascenseur (10), en particulier d'une chaîne de sécurité de l'ascenseur (10), comprenant des contacts de porte de l'ascenseur (10).

9. Ascenseur selon l'une des revendications précédentes, **caractérisé en ce que** le moteur d'ascenseur (12) est un moteur à aimant permanent.

10. Ascenseur selon l'une des revendications précédentes, **caractérisé en ce qu'**un relais de séparation (30) est connecté entre le secteur à courant alternatif, AC, (28) et le pont redresseur (26) pour séparer le convertisseur de fréquence (24) du secteur AC (28).

11. Procédé pour réaliser un entraînement d'urgence manuel pendant une coupure de courant dans un ascenseur selon l'une des revendications précédentes, procédé dans lequel, en cas de panne de courant :
- la connexion de l'entraînement par moteur (22) au secteur AC (28) est coupée via le relais de séparation (30),
- la connexion de la commande d'entraînement (42) aux commutateurs à semi-conducteurs (72) du pont inverseur (32) est coupée par la logique de sécurité (44),
- par l'actionnement du levier de desserrage de frein manuel (50), les freins d'ascenseur (20a, 20b) sont desserrés,
**caractérisé en ce que** :
- par l'actionnement du levier de desserrage de frein manuel (50) ou en faisant fontionner un actionneur manuel (64) au voisinage de celui-ci, l'état de séparation de la logique de sécurité (44) est changé en un état de fonctionnement pour connecter la commande d'entraînement (42) aux commutateurs à semi-conducteurs (72) du pont inverseur (32) afin de permettre un freinage dynamique du moteur d'ascenseur (12).

12. Procédé selon la revendication 11, **caractérisé en ce que** la logique de sécurité est connectée au circuit d'alimentation DC (60) en déplaçant le levier de desserrage de frein manuel (50) à partir de sa position de repos.

13. Procédé selon la revendication 11 ou 12, **caractérisé en ce que** par le desserrage des freins d'ascenseur (20a, 20b), le moteur d'ascenseur (12) est amené à fournir de l'énergie électrique en mode de générateur via les diodes antiparallèles (74) de circuits de commutateurs à semi-conducteurs (70a-70f) à la liaison DC (34).

14. Procédé selon la revendication 13, **caractérisé en ce que** le circuit d'alimentation DC (60) est réveillé en fonction de la tension dans la liaison DC.

15. Procédé selon l'une quelconque des revendications 11 à 14, **caractérisé en ce qu'**une nouvelle course d'ascenseur est interdite en fonction de l'état d'un commutateur de sécurité d'entraînement manuel (62) connecté au levier de desserrage de frein manuel (50) et/ou à l'actionneur manuel (64).
